# EUROPEAN PATENT APPLICATION

(11) **EP 4 765 610 A1**
(43) Date of publication of application: **24.06.2026**
(21) Application number: 24220933.6
(22) Date of filing: 18.12.2024
(51) Int. Cl.: H02M 3/00, H02M 3/335, H02J 50/12, B60L 53/12

(54) **A WIDE INPUT CORE-LESS POWER SUPPLY FOR WIDE BAND GAP DEVICE**

(71) Applicant: Volvo Car Corporation, 405 31 Göteborg (SE)
(72) Inventor: Zhang, Chi, SE-405 31 Göteborg (SE)
(74) Representative: Nederlandsch Octrooibureau

(57) **Abstract**

A power supply device comprises a secondary inductor (Ls) configured to form a transformer with a primary inductor (Lp). A first terminal of the secondary inductor is electrically connected to a second terminal of the secondary inductor via a second capacitor (C2), a inductor (Lc), and a third capacitor (C3), electrically connected in series. Two terminals of the third capacitor (C3) are electrically connected to respective output terminals to provide an output voltage (Vout). Two terminals of the third capacitor (C3) are electrically connected to the respective output terminals via an electronic network comprising a plurality of diodes (D1, D2) and a plurality of further capacitors (C4, C5, Cout). The power supply device may be implemented on a single chip or a dual chip.

## Description

### Technical Field

The present disclosure relates to a power supply device.

### Background of the Present Disclosure

Wide band gap devices may be suitable for use in electrical vehicles due to their relatively small switching loss and relatively high operating temperature. However, its fast switching speed results in higher dv/dt during switching process. This to this high dv/dt may cause common mode currents. Common mode current of considerable magnitude can distort the gating signals.

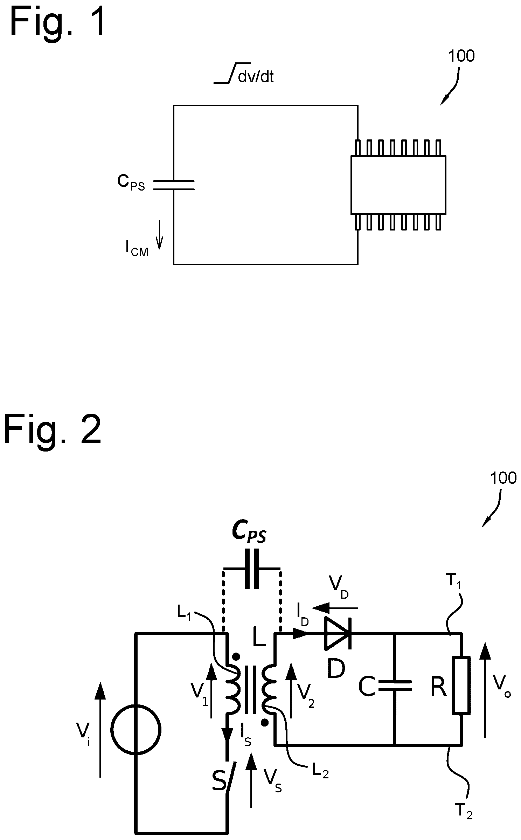

In order to keep common mode currents as small as much as possible, a low pseudo-capacitance is desired to be designed for both the gate driver IC and the gate driver power supply. For example, it is known to use an isolated power supply to achieve a smaller pseudo-capacitance. Fig. 2 shows a typical gate driver power supply using flyback based on high frequency transformer.

In conventional isolated power supply design, the high frequency transformer is designed to have a small coupling factor between the primary and secondary side of the high frequency transformer, which contributes to a small pseudo-capacitance. Such design considerations may lead to relatively large magnetic cores, large air gap design, or specific winding arrangements.

However, power supply advantageously has a relatively high coupling factor design between the primary and secondary side winding to have a good output voltage quality. So a low pseudo-capacitance value will not only affect power supply output voltage quality, but also results in a bulky power supply size, which is not vibrating-friendly.

In summary, the conventional power supply design may suffer from one or more drawbacks. For example, low pseudo-capacitance and common mode current may result in bulky power supply size. High dv/dt immunity may result in bulky power supply size. A proper balance between output voltage quality, pseudo-capacitance value and wind input voltage design may only be achieved with specific magnetic core selection and winding. A voltage feedback loop from the high voltage side, with high insulation capability, may be necessary to control the output voltage.

The background section is merely intended to provide a contextual overview of some current issues and is not intended to be exhaustive. Other contextual information may become apparent to a person of skill in the art upon review of the following detailed description.

### Summary of the Present Disclosure

According to an embodiment, a power supply device may comprise
a secondary inductor configured to form a transformer with a primary inductor,
wherein a first terminal of the secondary inductor is electrically connected to a second terminal of the secondary inductor by a second capacitor, a inductor, and a third capacitor, electrically connected in series,
wherein two terminals of the third capacitor are electrically connected to respective output terminals to provide an output voltage.

Surprisingly, the network on the secondary inductor side helps to reduce the pseudo-capacitance between the primary and secondary inductors and thereby reduces common mode current.

The two terminals of the third capacitor may be electrically connected to the respective output terminals via an electronic network comprising a plurality of diodes and a plurality of further capacitors. This further improves the electrical properties of the power supply device.

The electronic network may comprise a first diode having a first terminal and a second terminal; a second diode having a first terminal and a second terminal; a fourth capacitor having a first terminal and a second terminal; and a fifth capacitor having a first terminal and a second terminal, wherein the first terminal of the first diode is electrically connected in parallel to the first terminal of the third capacitor and the second terminal of the second diode, wherein the second terminal of the first diode is electrically connected in parallel to the first terminal of the fourth capacitor and the respective output terminal of the first terminal of the third capacitor, and wherein the second terminal of the third capacitor is electrically connected in parallel to the second terminal of the fourth capacitor and to the second terminal of the fifth capacitor, and wherein the first terminal of the second diode is electrically connected to the first terminal of the fifth capacitor and the respective output terminal of the third capacitor. This may further help to reduce the pseudo-capacitance and/or the common mode current.

The power supply device may further comprise the primary inductor, wherein two terminals of the primary inductor are electrically connected to respective input terminals to receive an input voltage. This provides for a compact integrated power supply device.

At least one of the two terminals of the primary inductor may be electrically connected to its respective input terminal via a capacitor. This further improves the electrical properties of the power supply device.

The two terminals of the primary inductor may be electrically connected to the respective input terminals via a network of switches. This further improves the electrical properties of the power supply device.

The secondary inductor may be integrated in a chip that does not include the primary inductor. This provides more flexibility in the design. Moreover, it may provide freedom to configure the pseudo-capacitance and/or common mode current by arranging the primary inductor as desired with respect to the secondary inductor.

The power supply device may comprise a printed circuit board, a first chip, and a second chip, wherein the primary inductor is implemented in the first chip and the secondary inductor is implemented in the second chip, and wherein the first chip and the second chip are mounted on the printed circuit board, wherein the primary inductor of the first chip faces the secondary inductor of the second chip. This way, the distance between the primary inductor and secondary inductor can be selected at time of assembly.

The primary inductor and the secondary inductor may be integrated in a single chip. This provides a compact power supply device with pre-configured properties.

The primary inductor and the secondary inductor may be core-less transformer inductors. This makes the power supply device less bulky. The power supply device design as set forth herein may allow to omit the cores of the inductors while still providing sufficient quality.

The person skilled in the art will understand that the features described above may be combined in any way deemed useful.

### Brief Description of the Drawings

The present disclosure will be described in further detail hereinafter with reference to the drawings. Similar items may be indicated by the same reference numerals throughout the drawings. The drawings are diagrammatic and may not be drawn to scale.
FIG. 1 shows a perspective view of a power supply device.
FIG. 2 shows a circuit diagram of a power supply device.
FIG. 3 shows a top view of a power supply device with two chips.
FIG. 4 shows a circuit diagram of a power supply device with two chips.
FIG. 5 shows a top view of a power supply device with a single chip.
FIG. 6 shows a circuit diagram of a power supply device with a single chip.
FIG. 7A-K show plots illustrating electric properties of the power supply devices.
FIG. 8 shows an example of pseudo-capacitance as a function of distance.
FIG. 9 shows an example of common mode current as a function of switching speed.
FIG. 10 shows an example of output voltage over time.

### Detailed Description

Certain exemplary embodiments will be described in greater detail, with reference to the accompanying drawings. The matters disclosed in the description, such as detailed construction and elements, are provided to assist in a comprehensive understanding of the exemplary embodiments. Accordingly, it is apparent that the exemplary embodiments can be carried out without those specifically defined matters. Also, well-known operations or structures are not described in detail, since they would obscure the description with unnecessary detail.

FIG. 1 shows a power supply device 100, that comprises an electric circuit with inductors and wide band gap devices inside. Wide band gap devices have relatively fast switching speed. This results in quick transitions between on and off, and a high peaks of voltage increase and/or voltage decrease. So, the voltage increase (or decrease) divided by time duration (dV/dt) may be have a large absolute value when switching on or off. Since power supply devices inherently have a pseudo-capacitance C_{PS} a common mode current I_{CM} may result.

FIG. 2 shows an electric circuit diagram of the power supply device 100. The power supply device 100 may be a shows a gate driver power supply using flyback based on a high frequency transformer. Alternating voltage source Vᵢ causes voltage V1 on the primary inductor L1 when switch S is closed. Secondary inductor L2 obtains voltage V2 from the primary inductor V1. And one end of L2 is connected via a rectifying diode D to the first output terminal T1. The other end of inductor L2 is connected to the second output terminal T2. The output terminals T1 and T2 are electrically connected to each other via a capacitance C and a resistance R arranged in parallel. In order to keep current mode current (ICM) as small as much as possible, a low pseudo-capacitance C_{PS} may be desired to be designed for both the gate driver IC and the gate driver power supply. For example, an isolated power supply may be used to achieve a smaller C_{PS}.

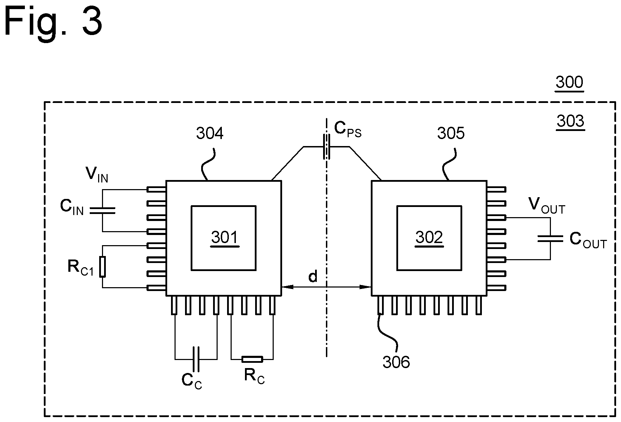

FIG. 3 shows a two chip implementation of a power device. The primary side chip 301 comprises the primary inductor Lp, and the secondary side chip 302 comprises the secondary inductor Ls. As shown, the distance d between the two chips 301, 302 defines the distance between the primary inductor Lp and the secondary inductor Ls. CPS denotes the pseudo-capacitance, which is not a separate component but is a capacitance that inherently exists between the primary and secondary inductors. As illustrated, the primary side chip 301 and the secondary chip 302 may be placed in an electric circuit comprising several further components. This circuit may be implemented for example on a printed circuit board. For example, suitable terminals of the primary side chip may be connected to an input voltage Vin, a capacitance Cin, a resistance R_{C1}, a resistance Rc, and a capacitance Cc. The secondary side chip 302 may have output voltage terminals Vout which may be connected to a capacitive load Cout.

Both chips 301 and 302 may have a separate chip package 304, 305. The primary side chip 301 may be packed in a first package 304 and the secondary side chip 302 may be packed in a second package 305. These packages 304, 305 may be molded or manufactured in any other suitable way. The packages 304, 305 may have pins 306 extending therefrom for external connections of the electric circuit within the respective chips 301, 302. These pins 306 can be soldered onto the PCB, for example.

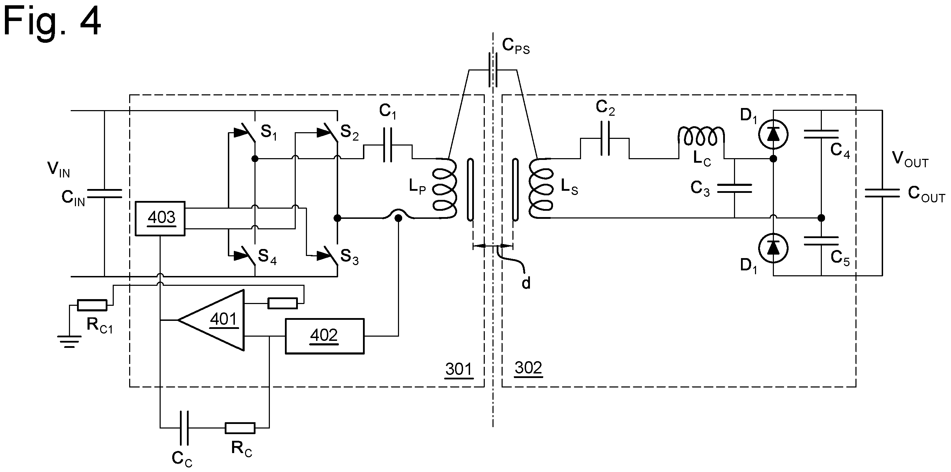

For example, as shown in FIG. 3, the primary side package 304 with primary side chip 301 and the secondary side package 305 with secondary side chip 302 may be soldered onto one and the same side of a PCB 303. Alternatively, the primary side package 304 and the secondary side package 305 may be soldered on opposing sides of a PCB (not illustrated). Instead of soldering other fixation means may be contemplated. For example, the components of the primary side chip 301 shown in FIG. 4, can be partly separate components that are included into one package 304, for example. Similarly the components of the secondary side can be packaged in the package 305.

FIG. 4 shows the electric circuit of the two-chip implementation in greater detail. The diagram shows the input capacitor ***C_{IN}***, the output capacitor ***C_{OUT},*** the primary side resonant capacitor ***C₁***, the secondary side resonant component represented by equivalent diagram ***C₂ C₃*** Lc, voltage increasing capacitors ***C₄*** and ***C₅***, voltage increasing diodes ***D₁*** and ***D₂***, a core-less transformer primary side inductor ***L_{P}*** , and a core-less transformer secondary side inductor ***L_{S}***.

Switches ***S₁*-*S₄*** form a full bridge. Such a full bridge may be connected as known in prior art per se. The switches S1 through S4 may be wide band gap devices. Capacitor ***C₁*** and inductor ***Lₚ*** form a primary side resonant circuit while inductor ***Lₛ***, capacitor ***C₂***, inductance ***L_{C}*** , and conductor ***C₃*** form the secondary side circuit.

The conductors ***C₄*** and ***C₅*** and the diodes ***D₁*** and ***D₂*** may be used to double the voltage on ***C₃,*** so that the output voltage Vout is greater than the voltage on C3.

Control may be implemented in the primary side circuit by controller 401, peak detector 402, and pulse width modulator 403. To that, end peak detector 402 may be configured to detect the peak current flow through ***Lₚ*.** Resistors ***R_{c}, R_{c1},*** and capacitor ***C_{c}*** may be used to set the control parameters to achieve current peak control. The controller 401 may be any digital or analog signal processor, such as a computer processor. The controller 401 controls the pulse width modulator 403 based on the signal received from the peak detector 402.

The parameters (C1,C2, C3, Lp, Ls, and Lc) may be selected to ensure that the circuit formed by C1, C2, C3, Lp, Ls, and Lc has a resonance frequency that is the same or similar as the switching frequency of S1-S4. An example is listed as below:
Primary side resonant capacitor - *C₁* : *5.1nF*
Secondary side resonant component- *C*_{*2*:}:5.1nF; Ca:51nF; *L_{C}*:0.5nH
Core-less transformer primary side inductor - *L_{P}*:4.967nH
Core-less transformer secondary side inductor - *L_{S}*:4.967nH
Turn ratio of Lp and Ls may be 10:16

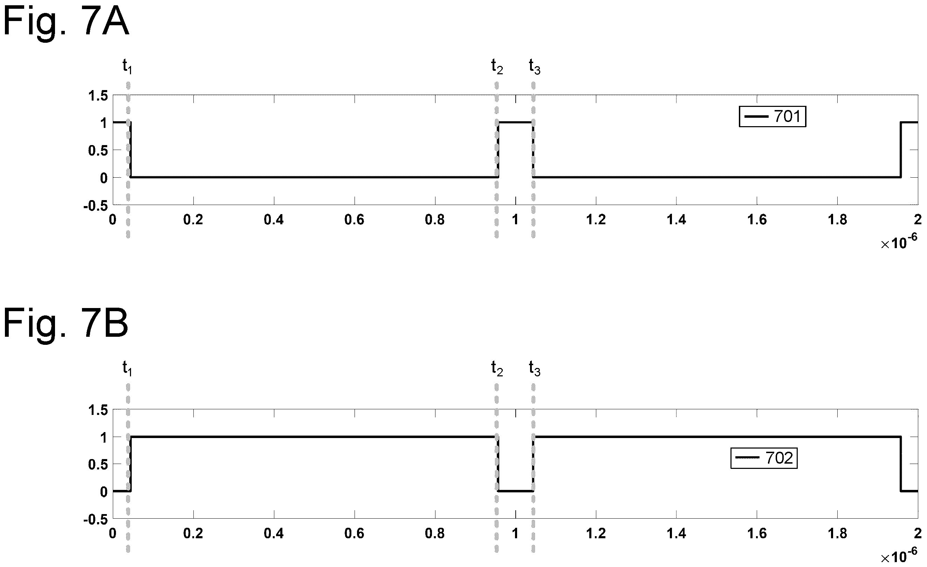

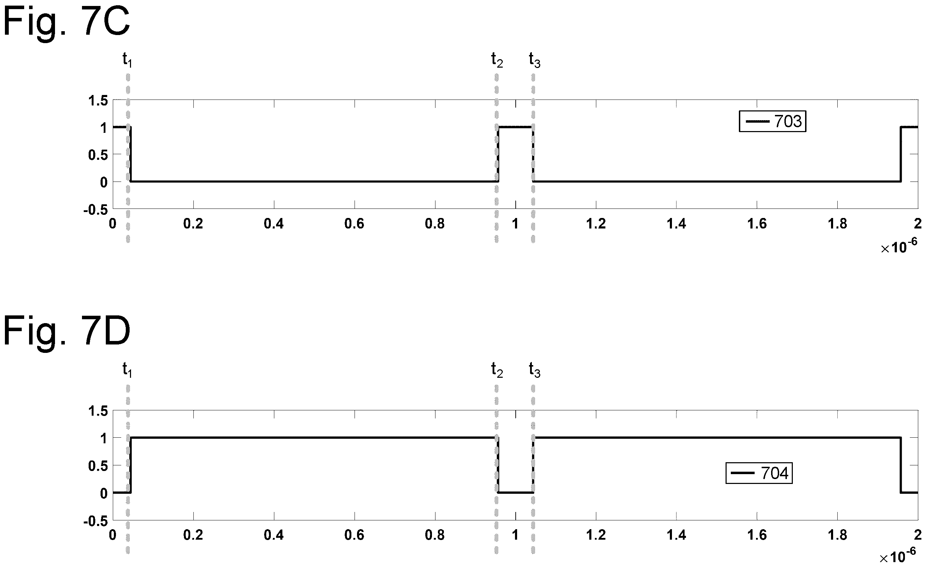

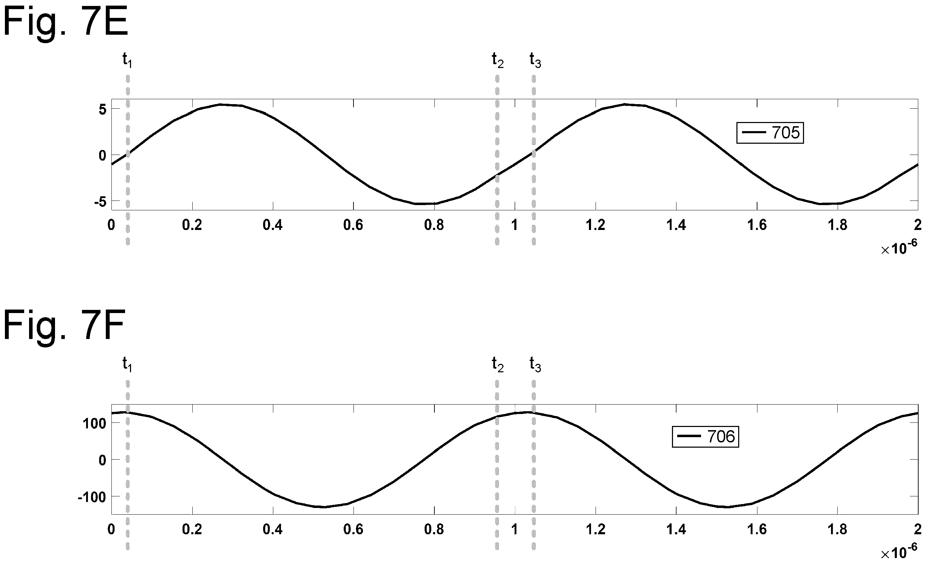

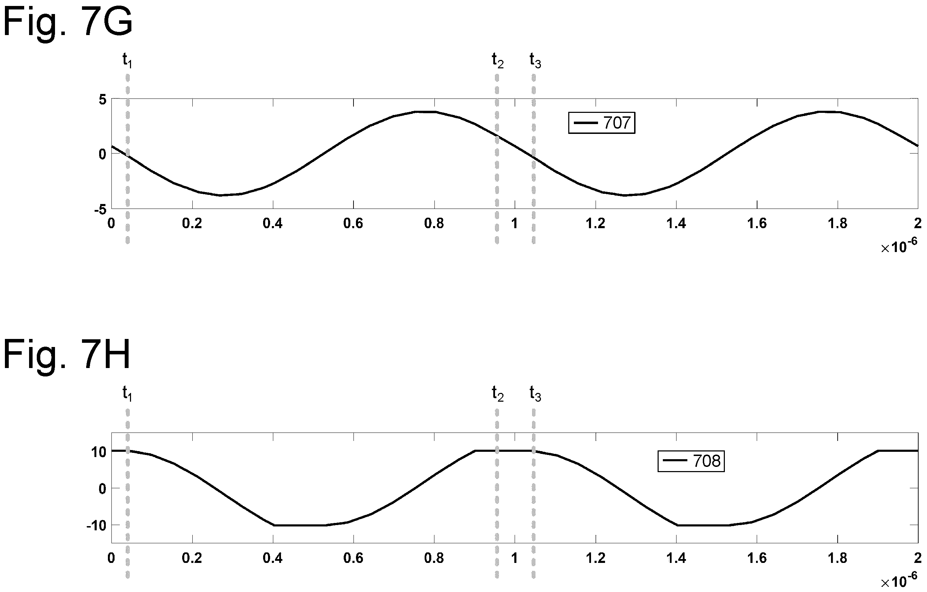

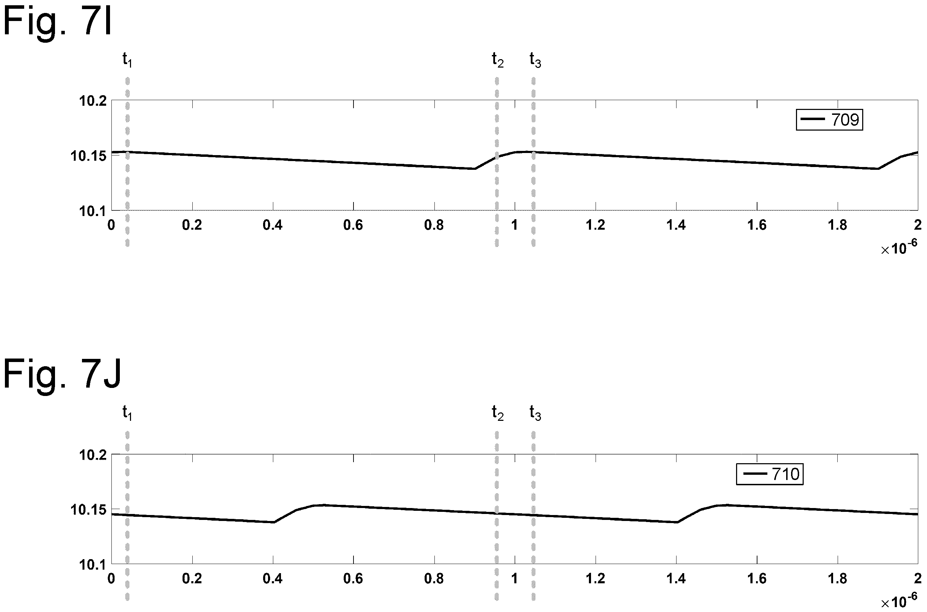

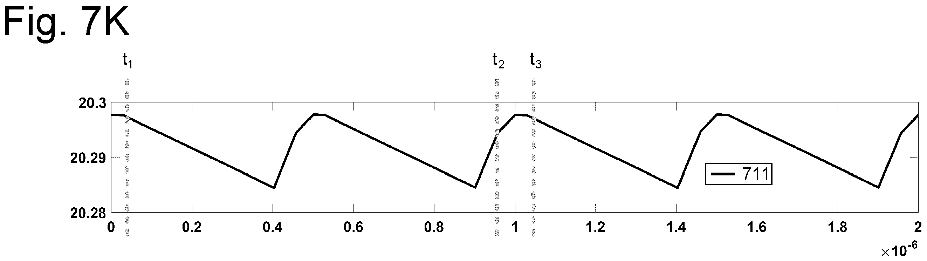

A tested working process with the above values is shown in FIG. 7. Herein, the x-axis denotes time in seconds. The y-axis shows an arbitrary unit. Graph 701 of FIG. 7A shows the state of switch S1, i.e. the gate of S1 (1 = open, 2 = closed). Graph 702 of FIG. 7B shows the gate of switch S2, Graph 403 of FIG. 7C shows the gate of switch S3, graph 704 of FIG. 7D shows the gate of switch S4. Graph 705 of FIG. 7E shows current through capacitor C1 and primary inductor Lp. Graph 706 of FIG. 7F shows the voltage across the secondary inductor Ls. Graph 707 of FIG. 7G shows the current through capacitor C2, inductor Lc, and secondary inductor Ls. Graph 708 of FIG. 7H shows the voltage of capacitor C3. Graph 709 of FIG. 7*I* shows the voltage of capacitor C4. Graph 710 of FIG. 7J shows the voltage of capacitor C5. Graph 711 of FIG. 7K shows the output voltage Cout.

As illustrated, switches S1 and S3 may share the same gate signal. Also switches S2 and S4 may shares a same gate signal. And, in the illustrated example, the switch frequency of S1-S4 is 1MHz, which means t3-t1 = 1/1MHz (megahertz) = 1 µs (microsecond). The switching pattern between t1 and t3 may be continuously repeated when in use. The switching cycle may have a first part of about 0.9 µs from t1 to t2 and a second part of about 0.1 µs from t2 to t3.

The values of capacitors C1, C2, C3, and inductances Lp, Ls, and Lc may be selected to make the current and voltage in the circuit follow the resonance frequency. In the illustrated FIG. 7 the resonance frequency of 1 MHz is shown by way of example. However, any other suitable resonance frequency may be configured. It can be seen that current through capacitors C1 and C2 and inductors Lp and Ls are all sinusoidal. Also the voltages over these components are all sinusoidal in the illustrated example. This sinusoidal shape implies that the circuit is working successfully in a resonant way.

As described above, FIG. 3 and FIG. 4 illustrate a two-chip solution. The transformer's primary side inductor ***Lₚ*** and the transformer's secondary side inductor ***Lₛ*** form a core-less transformer. Switches ***S₁-S₄*** can be implemented for example as Si mosfet, SiC mosfet or GaN. Such components can support high frequency switching speed, for instance 500kHz. A peak detector 402 may be used to detect the peak current that flows through the primary side inductor ***Lₚ*.** Resistance ***R_{C1}*** is used to set the control reference for the current controller. R_{C1} connects the controller 401 to ground via its resistance. At the same time, resistor ***R_{C}*** and capacitance ***C_{c}*** may be used to form a typical Proportional-Integral (PI) controller to control the current flowing through the primary side inductor ***Lₚ*** Besides, the input capacitor ***C_{IN}*** and the output capacitor ***C_{OUT}*** may be used to form the typical input and output capacitor.

The implementation shown in FIGs. 3 and 4 comprises two chips, namely a primary side chip 301 that receives input voltage Vin for the power supply and implements the current control. The secondary side chip 302 receives inductive energy from the primary side chip 301 and is configured to transfer the energy from the input side to establish the output voltage Vout.

Throughout the figures, ***d*** is the distance between the primary side inductor ***Lₚ*** and the secondary side inductor ***Lₛ*.** This distance ***d*** is able to be adjusted flexibly together with control parameters **(*R_{C}, R_{C1}, C_{C}*)** to configure the output voltage **(*V_{OUT}*)** quality.

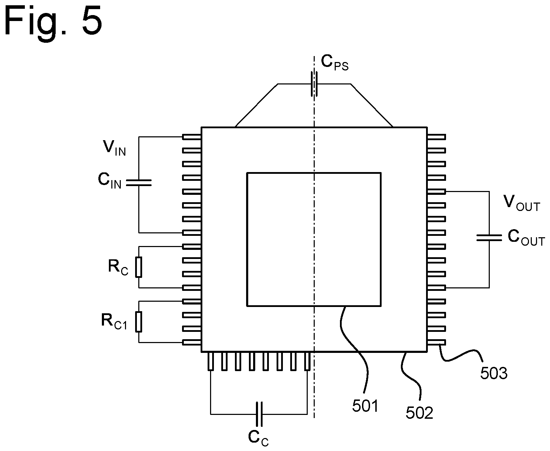

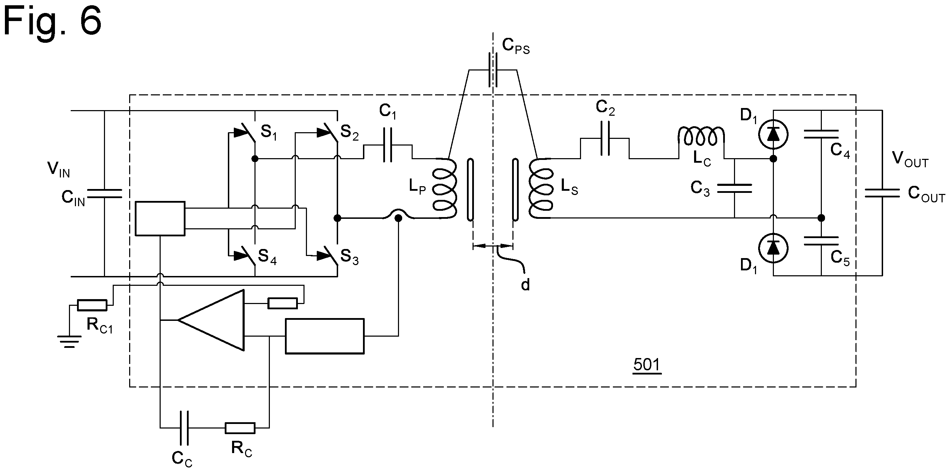

FIG. 5 shows a single chip 501 implementation in a single package 502. FIG. 6 shows the electric diagram of the single-ship implementation of FIG. 5. Chip 501 contains both the primary inductor ***Lₚ*** and the secondary side inductor ***Lₛ*.** The distance between the primary inductor Lp and secondary side inductor Ls is therefore fixed. The electric diagram may otherwise be the same as shown and described for the two-chip solution. As shown in FIG. 5, the pseudo-capacitance Cps occurs inside the single chip 501. Otherwise, the connected components C_{IN}, R_{C}, R_{C1}, C_{C}, and C_{OUT} may be similar as described above for the two-chip implementation.

As shown in FIG. 6, the electric circuit of the single-chip implementation comprises the transformer primary side inductor ***Lₚ*** and the transformer secondary side inductor ***Lₛ*.** These inductors Lp and Ls form the core-less transformer and it is implemented inside one chip. With the help of packing material, the distance ***d*** between the primary side inductor Lp and the secondary side inductor Ls can be reduced as much as possible (or as much as needed for the desired quality). This may offer a more integrated and compact implementation compared with the dual chip implementation shown in FIGs. 3 and 4. All the other functions and components are the same for both implementations. The electronic circuits and components of both primary chip 301 and secondary chip 302 may thus be integrated into one single chip 501.

Chips 501 may have a chip package 502. The chip 501 may be packed in the package 502. This package 502 may be molded or manufactured in any other suitable way. The package 502 may have pins 503 extending therefrom for external connections to the electric circuit within the chips 501. These pins 503 can be soldered onto a PCB, for example.

Instead of soldering other fixation means may be contemplated. For example, the components of the chip 501 shown in FIG. 6, can be partly separate components that are included into one package 502, for example.

It will be understood that the inductors described herein may be implemented as coils, for example.

In general, both implementations shown in FIGs. 3 through 6 illustrate aspects of a power supply device, which may be implemented in a single-chip of dual-chip implementation. In general, the power supply device comprises a secondary inductor Ls configured to form a transformer with a primary inductor Lp, wherein a first terminal of the secondary inductor is electrically connected to a second terminal of the secondary inductor via a second capacitor C2, a inductor Lc, and a third capacitor C3, electrically connected in series. Two terminals of the third capacitor C3 are electrically connected to respective output terminals to provide an output voltage Vout. The two terminals of the third capacitor C3 may be electrically connected to the respective output terminals via an electronic network comprising a plurality of diodes D1, D2 and a plurality of further capacitors C4, C5, Cout.

As illustrated, the electronic network of the power supply device 300, 501 may comprise a first diode D1 having a first terminal and a second terminal; a second diode D2 having a first terminal and a second terminal; a fourth capacitor C4 having a first terminal and a second terminal; and a fifth capacitor C5 having a first terminal and a second terminal.

The first terminal of the first diode D1 may be electrically connected in parallel to the first terminal of the third capacitor C3 and the second terminal of the second diode D2. The second terminal of the first diode D1 may be electrically connected in parallel to the first terminal of the fourth capacitor C4 and the respective output terminal of the first terminal of the third capacitor C3. The second terminal of the third capacitor C3 may be electrically connected in parallel to the second terminal of the fourth capacitor C4 and to the second terminal of the fifth capacitor C5. The first terminal of the second diode D2 may be electrically connected to the first terminal of the fifth capacitor C5 and the respective output terminal of the third capacitor C3.

Two terminals of the primary inductor Lp may be electrically connected to respective input terminals to receive an input voltage Vin. At least one of the two terminals of the primary inductor Lp may be electrically connected to its respective input terminal via a capacitor C1. The two terminals of the primary inductor Lp may be electrically connected to the respective input terminals via a network of switches S1 ,S2,S3,S4.

The secondary inductor Ls may be integrated in a chip 302 that does not include the primary inductor Lp, as illustrated in FIGs. 3 and 4. The primary inductor'Lp may be included in another separate chip 301. Chips 301 and 302 may be connected to an electronic circuit, for example mounted on a printed circuit board. In this case, the chips 301 and 302 may be fixed relative to each other so that the primary inductor Lp of the first chip 301 faces the secondary inductor Ls of the second chip 302. This allows to configure the distance d in between the primary inductor Lp and the secondary inductor Ls.

Alternatively, as illustrated in FIGs. 5 and 6, the primary inductor Lp and the secondary inductor Ls may be integrated in a single chip.

In any case, the primary inductor and the secondary inductor may be core-less transformer inductors, in particular core-less coils.

The distance between Lp and Ls affects the pseudo-capacitance. The larger the distance between Lp and Ls, the smaller the pseudo-capacitance is. In the two-package configuration, the distance may be increased and thus the pseudo-capacitance reduced.

Both the dual chip and the single chip implementation have advantageous properties, such as small pseudo-capacitance ***C_{PS}*** value between the primary inductor Lp and secondary inductor Ls. For example, ***C_{PS}*** <1.5pF can be achieved if the single-chip implementation is used. The dual-chip implementation may offer possibility to reduce the pseudo-capacitance further with e.g. a ***C_{PS}*** < 0.5pF.

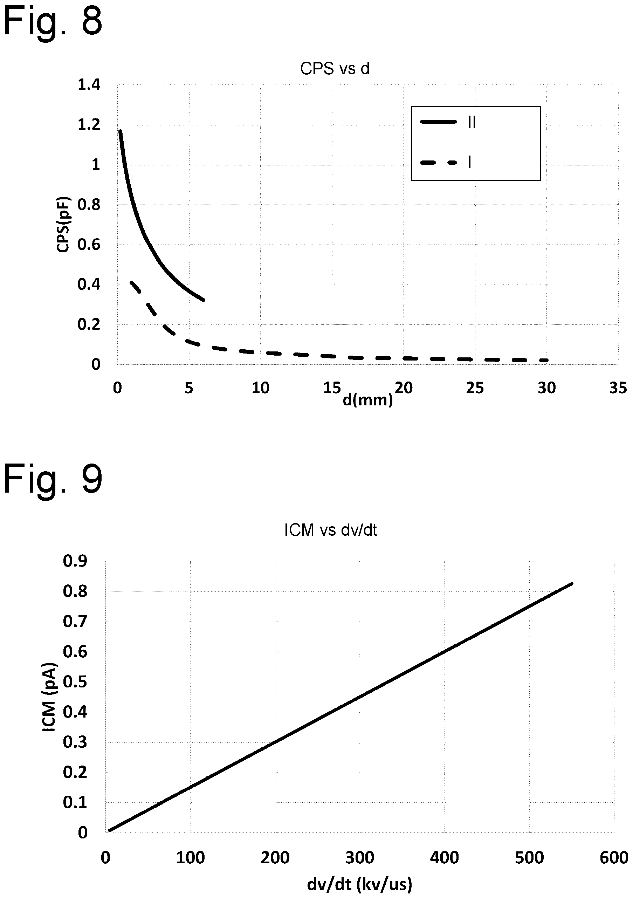

In the graph of FIG. 8, curve I shows performance of the dual-chip implementation of FIGs. 5 and 6, whereas curve II shows performance of the single-chip implementation of FIGs. 3 and 4. Specifically, FIG. 8 shows results obtained for the pseudo-capacitance value ***C_{PS}*** in pF as a function of distance d in mm. It shows that this value is lower than in other solutions.

FIG. 9 shows results obtained for the common mode current ***I_{CM}*** in pA as a function of the switching speed dV/dt in kV/µs. It shows that this value is lower than in other solutions.

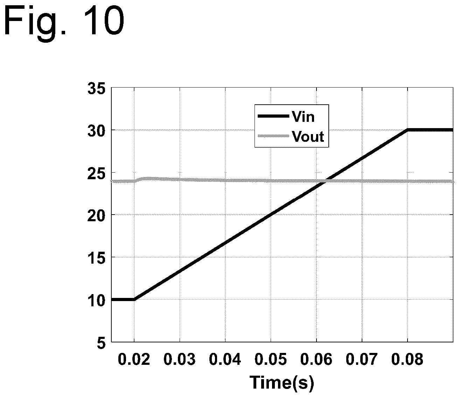

FIG. 10 shows an example of results obtained for the output voltage behavior Vout (on the vertical axis) over time in seconds (on the horizontal axis), for a given input voltage shape Vin. It shows that the output voltage is constant regardless of the varying input voltage.

The techniques disclosed herein may help to solve at least some of the problems traditional isolated power supply. For example, CPS may be reduced to less than 1.5pF (picofarad) without affecting power supply volume. ICM may be reduced to less than 0.5pA (picoampere) without affecting power supply volume. The circuit may be designed to support wide band switches with dv/dt application up to e.g. 300kV/µs (kilovolts per microsecond). Further, it may be possible to obtain a stable output voltage control under wide input voltage range, even without feedback loop from the high voltage side.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiments disclosed, but that the present disclosure will include all embodiments falling within the scope of the appended claims.

## Claims

1. A power supply device comprising:
a secondary inductor (Ls) configured to form a transformer with a primary inductor (Lp),
wherein a first terminal of the secondary inductor is electrically connected to a second terminal of the secondary inductor via a second capacitor (C2), a inductor (Lc), and a third capacitor (C3), electrically connected in series,
wherein two terminals of the third capacitor (C3) are electrically connected to respective output terminals to provide an output voltage (Vout).

2. The power supply device according to claim 1, wherein the two terminals of the third capacitor (C3) are electrically connected to the respective output terminals via an electronic network comprising a plurality of diodes (D1, D2) and a plurality of further capacitors (C4, C5, Cout).

3. The power supply device according to claim 2, wherein the electronic network comprises:
a first diode (D1) having a first terminal and a second terminal;
a second diode (D2) having a first terminal and a second terminal;
a fourth capacitor (C4) having a first terminal and a second terminal; and
a fifth capacitor (C5) having a first terminal and a second terminal,
wherein the first terminal of the first diode (D1) is electrically connected in parallel to the first terminal of the third capacitor (C3) and the second terminal of the second diode (D2),
wherein the second terminal of the first diode (D1) is electrically connected in parallel to the first terminal of the fourth capacitor (C4) and the respective output terminal of the first terminal of the third capacitor (C3), and
wherein the second terminal of the third capacitor (C3) is electrically connected in parallel to the second terminal of the fourth capacitor (C4) and to the second terminal of the fifth capacitor (C5), and
wherein the first terminal of the second diode (D2) is electrically connected to the first terminal of the fifth capacitor (C5) and the respective output terminal of the third capacitor (C3).

4. The power supply device according to any preceding claim, further comprising the primary inductor (Lp),
wherein two terminals of the primary inductor (Lp) are electrically connected to respective input terminals to receive an input voltage (Vin).

5. The power supply device according to claim 4, wherein at least one of the two terminals of the primary inductor (Lp) is electrically connected to its respective input terminal via a capacitor (C1).

6. The power supply device according to claim 4 or 5, wherein the two terminals of the primary inductor (Lp) are electrically connected to the respective input terminals via a network of switches (S1,S2,S3,S4).

7. The power supply device according to any preceding claim, wherein the secondary inductor (Ls) is integrated in a chip (302) that does not include the primary inductor (Lp).

8. The power supply device according to any preceding claim,
comprising a printed circuit board (303), a first chip (301), and a second chip (302),
wherein the primary inductor (Lp) is implemented in the first chip (301) and the secondary inductor (Ls) is implemented in the second chip (302), and
wherein the first chip (301) and the second chip (302) are mounted on the printed circuit board (303),
wherein the primary inductor (Lp) of the first chip (301) faces the secondary inductor (Ls) of the second chip (302).

9. The power supply device according to any one of claims 1 to 6, wherein the primary inductor (Lp) and the secondary inductor (Ls) are integrated in a single chip (501).

10. The power supply device according to any preceding claim, wherein the primary inductor (Lp) and the secondary inductor (Ls) are core-less transformer inductors.
